# EUROPÄISCHE PATENTSCHRIFT

(11) **EP 1 240 633 B1**
(45) Veröffentlichungstag und Bekanntmachung des Hinweises auf die Patenterteilung: **14.05.2003**
(21) Anmeldenummer: 99916876.8
(22) Anmeldetag: 18.03.1999
(51) Int. Cl.: G08B 5/22

(54) **LOKATIONS- ODER INVENTARISIERUNGSSYSTEM**
LOCATION OR INVENTORY SYSTEM
SYSTEME DE LOCALISATION OU D'INVENTORIAGE

(30) Priorität: 18.03.1998 DE 19812909
(43) Veröffentlichungstag der Anmeldung: 18.09.2002
(73) Patentinhaber: BB-Data Gesellschaft für Informations- und Kommunikationssysteme mbH, 13355 Berlin (DE)
(72) Erfinder: MEY, Thorsten-Uwe, D-13595 Berlin (DE); HERRMANN, Dirk, D-12557 Berlin (DE)
(74) Vertreter: Meinke, Dabringhaus und Partner GbR, Patentanwälte
(86) Internationale Anmeldenummer: EP9901964
(87) Internationale Veröffentlichungsnummer: WO99048177

(56) Entgegenhaltungen:
- FR-A- 2 746 203
- US-A- 5 406 297
- US-A- 5 611 051

## Beschreibung

Die Erfindung betrifft ein Lokations- und Inventarisierungssystem für Gegenstände, welche als Energieabnehmer mit einen Anschluß für ein Energieversorgungsnetzwerk versehen sind und jeweils eine individuelle Lokations- und Inventarisierungsinformation aufweisen, die von einer zentralen Stelle aus verifizierbar ist, gemäß dem Oberbegriff des Anspruchs 1. Ein solches System ist z.B. aus der FR-A-2 746 203 bekannt.

Bei derartigen Lokations- und Inventarisierungssystemen kommt es darauf an, das Vorhandensein und den Standort von Gegenständen zu erfassen. Es sind dabei bereits Systeme bekannt, bei denen die zu inventarisierenden Gegenstände mit einer telemetrisch abfragbaren Kennung aufweisenden Etiketten versehen sind, die von einer in der Nähe befindlichen Station detektierbar sind, welche damit durch ein regelmäßiges Ansprechen und nachfolgender Abfrage das Vorhandensein und die Art der Gegenstände überprüft und somit Lokations- und Inventarisierungsdaten der in der Nähe befindlichen Gegenstände bereithält.

Nachteilig ist dabei, daß spezielle Geräte als lokale Überwachungsstationen angeschafft werden müssen, deren einziger Zweck in der Abfrage und gegebenenfalls Übermittlung der abgefragten Gegenstandskennungen an eine übergeordnete Stelle besteht. Oft können durch Funkabschattungen die zu inventarisierenden Geräte nicht permanent erfaßt werden und es ist die aufwendige Installation von speziellen Tochterzentralen notwendig, um eine vollständige Erfassung zu ermöglichen.

Der Erfindung liegt deshalb die Aufgabe zugrunde, ein Lokations- und Inventarisierungssystem der eingangs genannten Gattung anzugeben, welches die Möglichkeit aufweist, ohne Installation eines zusätzlichen speziell darauf ausgelegten Systems und insbesondere ohne Notwendigkeit einerzusätzlichen Informationsstruktur bzw. Netzwerks Gegenstände zu erfassen, welche sich in Gebäuden oder in deren Nähe befinden.

Diese Aufgabe wird, ausgehend von einem Lokations- und Inventarisierungssystem gemäß dem Oberbegriff des Anspruchs 1 durch die im kennzeichnenden Teil dieses Anspruchs angegebenen Merkmale gelöst.

Die Erfindung schließt die technische Lehre ein, daß - zumal die meisten zu inventarisierenden Geräte mit einem Anschluß für das Stromnetz ausgestattet sind durch einfache entsprechende Zusätze mit geringem Aufwand ein Lokations- und Inventarisierungssystem geschaffen werden kann, daß einfach und bequem handhabbar ist. Die Zusätze lassen sich auf einfache Weise sowohl dem örtlichen Installationsnetz als auch den zu inventarisierenden Gegenständen zufügen. Damit erhält das Stromnetz die zusätzliche Funktion eines Lokationsgebers. Dies bleibt für den normalen Stromnutzer unbemerkt. Die Lokationsinformation wird bei entsprechende vorbereiteten Geräten ohne weitere Maßnahmen übertragen und weitergegeben.

Durch Abteilung des Installationsnetzes in unterschiedliche "Informationszellen", die bezüglich der abzugebenden Lokalisierungsinformation voneinander getrennt sind, werden lokale Bereiche geschaffen, denen unterschiedliche Lokationsinformationen zugeordnet sind. Jedes innerhalb einer derartigen Zelle an das Energienetz angeschlossene Gerät nimmt mit der Stromenergie die Lokationsinformation auf, welche bei der Weiterverarbeitung mit einer individuellen Gegenstandskennung verbunden und an eine zentrale Überwachungsstelle zurückgemeldet wird.

Dieses System läßt sich nur mit erheblichem Aufwand manipulieren, da die Lokationsinformation im örtlichen Energienetz erzeugt wird, welches entsprechend der gewünschten örtlichen Auflösung der zu übermittelnden Lokations- und Inventarisierungsinformation in einzelne Bereiche unterteilt wird. Die angeschlossenen Geräte können dann auch ohne jeden zusätzlichen Lokations- und Inventarisierungsaufwand bezüglich ihres Standorts verändert werden. Wird einmal vorausgesetzt, daß die betreffenden Gebäude eines Unternehmens oder einer anderen wirtschaftlichen Einheit mit den betreffenden Installationen versehen sind, so kann sofort nach dem Umzug der Gegenstand an seinem neuen Aufstellungsort von der Überwachungseinheit erkannt und weiter überwacht werden. Das ungenehmigte Entfernen eines Gegenstands kann damit ebenfalls detektiert und angezeigt werden.

An der zentrale Überwachungsstation sind dabei die gesamten Lokations- und Inventarisierungsdaten, bestehend jeweils aus der Lokations- und Gegenstandskennung, abfrag- und im Zusammenhang auswertbar.

Die Rückmeldung der Lokations- und Inventarisierungsdaten kann dann - durch Einsatz eines geeigneten Verfahrens - über einen Rückkanal unter Benutzung des Fernsprechnetzes oder eines üblichen, insbesondere PC-kompatiblen Datennetzwerks erfolgen. Hierbei ist eine in der Nähe befindliche Datenverarbeitungsstation oder ein Fernsprecher mit einem Empfänger für extern von den Gegenständen aufzunehmende, die Lokations- und Inventarisierungsdaten enthaltenden Signale versehen. Wird als Datenverarbeitungsstation ein PC verwendet, kann der entsprechende Zusatz insbesondere in Form einer Erweiterungskarte oder extern über eine serielle oder parallele Schnittstelle vorgesehen werden. Die von den Gegenständen durch aktive oder passive Kommunikation in Zuordnung zueinander übermittelten Lokations- und Inventarisierungs- und Lokationskennungen werden zu einem gemeinsamen Datensatz zusammengefügt und an die Überwachungstation in dem angeschlossenen Datennetz weitergeleitet.

Besonders vorteilhaft ist dabei, daß die Lokationskennung fest mit der Gebäudeinstaliation verbunden ist, so daß die Gefahr eines Versagens gering ist. Entsprechendes gilt für die die individuelle Gegenstandskennung tragenden Gegenstände oder Geräte. Der gesamte übrige Teil des Systems ist konventionell gestaltet und braucht auch für die Erzeugung oder Übertragung der Lokations- und Inventarisierungsdaten nicht besonders individualisiert zu werden. Der wesentliche Teil der Datenübertragung erfolgt über das Energienetz. Das System kann aber auch in Computerdatennetze in der Weise integriert werden, als daß örtliche Computer in den Lokations- und Inventarisierungsverbund einbezogen werden, in dem sie Lokations- und Inventarisierungsdaten aufnehmen und weiterleiten oder als Überwachungsstation sammeln. Wohlgemerkt kann diese Funktion auch von speziell ausgebildeten Fernsprechgeräten wahrgenommen werden.

Weiterhin vorteilhaft ist auch, daß die Datenverarbeitungsgeräte selbst auf einfache Weise inventarisiert und dabei auch ohne Schwierigkeiten bei sich selbsttätig aktualisierender Lokationskennung an unterschiedlichen Orten betrieben werden können.

Günstig ist bei Anwendung des erfindungsgemäßen Systems, daß im Falle eines Serviceeinsatzes der Zielort des Servicetechnikers bei der Überwachungsstation, von der aus sich der Techniker auf den Weg macht oder die für ihn erreichbar ist, bekannt ist. Nicht selten kommt es nämlich vor, daß aus organisatorischen Gründen ganze Abteilungen mit dem zugehörigen in andere Gebäude ziehen, ohne daß es den technischen Abteilungen, die für den Betrieb und die Wartung zuständig sind, bekannt wird.

Besonders vorteilhaft bei der vorliegenden Lösung sind auch folgende Punkte: Die Lösung ist kurzfristig realisierbar, und unabhängig von Netzwerkprotokollen einsetzbar. Es können dabei jede Art von Gegenständen und auch Netzwerkkomponenten ohne Standardbetriebssystem verwaltet werden.

Bei einer anderen vorteilhaften Weiterbildung erfolgt auch die Rückmeldung der Daten über das Datennetz nach dem Prinzip Data-on-Powerline, wie es in einer gleichzeitig eingereichten Patentanmeldung derselben Anmelderin dargestellt ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1: als Ausführungsbeispiel der Erfindung ein Lokations- und Inventarisierungssystem, welches auf einem Energienetz mit Übertragung von Lokationsdaten aufbaut, das mit den Maßnahmen gemäß der Erfindung versehen ist,
- Figur 2a: ein Blockschaltbild eines Details des Ausführungsbeispiels gemäß Figur 1 mit den die Erfindung betreffenden Teilen eines zu inventarisierenden Geräts mit Anschluß an ein Energienetzwerk mit Mitteln zur Übertragung von Lokationsdaten,
- Figur 2b: ein Blockschaltbild eines weiteren Details des Ausführungsbeispiels gemäß Figur 1 mit den die Erfindung betreffenden Teilen eines Datenverarbeitungsgerätes zum Anschluß an ein Datennetz mit Übertragung von Lokations- und Inventarisierungsdaten deren Lokationsteil von einem Energienetz stammt,
- Figur 3a: ein Schaltgerät für ein Energienetz, welches einer Netzwechselspannung eine Lokationskennung für eine Anzahl von anzuschließenden energieverbrauchenden Geräten aufmoduliert sowie
- Figur 3b: ein Zusatzgerät für ein energieaufnehmendes System zum Anschluß an ein Energienetz mit Mitteln zur Dekodierung einer Lokationskennung einer Netzwechselspannung, die von dem Schaltgerät gemäß Figur 3a für eine Anzahl von anzuschließenden energieverbrauchenden Geräten dem Energieträger aufmoduliert wurde.

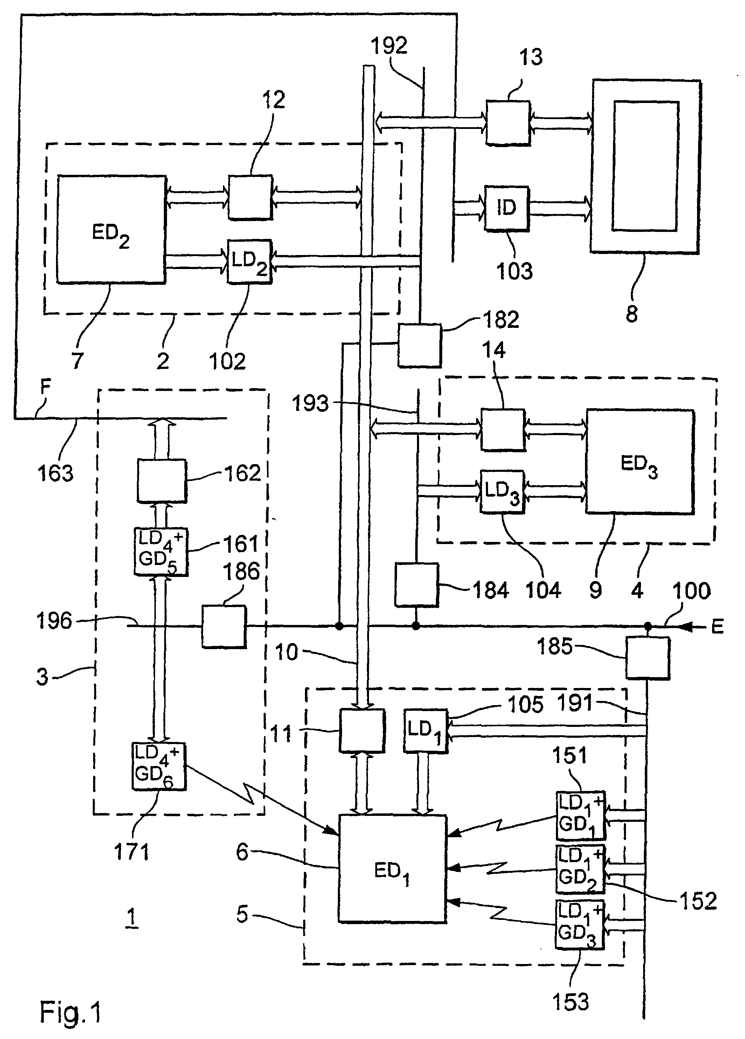

Bei dem in Figur 1 als Blockschaltbild dargestellten Lokations- und Inventarisierungssystem 1 sind an unterschiedlichen Aufstellorten 2 bis 5 verschiedene weiter unten näher beschriebene Systemteile vorhanden. Die in dem System bereitzustellenden Lokations- und Inventarisierungsdaten weisen außer den die Gegenstände in dem System individualisierenden Gegenstandskennungen zusätzliche Lokationskennungen auf, die jeweils gemeinsam einer Überwachungstation zur Auswertung zugeführt werden.

In dem System sind zunächst einmal Datenverarbeitungssysteme 6 bis 9 vorgesehen, welche über Datennetzanschlüsse 11 bis 14 mit einem mit "D" bezeichneten Datennetz 10 verbunden sind, über das außer einem normalen Datenbetrieb auch die Weiterleitung von Lokations- und Inventarisierungsdaten-wie weiter unten beschrieben - erfolgt. Die Datenverarbeitungssysteme dienen dabei also einerseits der Wahrnehmung üblicher Datenverarbeitungsaufgaben und andererseits der Weiterleitung der Lokations- und Inventarisierungsdaten. Daneben lassen sich mit dem beschriebenen System auch selbst inventarisieren und bezüglich ihres Aufstellungsorts überwachen.

Bei dem Datenverarbeitungssystem 8 handelt es sich um die Überwachungsstation, bei der die Lokations- und Inventarisierungsdaten gesammelt werden. Hier stehen sie für Auswertungs- und statistische Zwecke zur Verfügung. Dieses System kann an beliebiger Stelle im Netz dort angeordnet sein, wo die betreffenden Daten zur Verfügung stehen sollen. Darunter können sich auch sehr entfernte Orte befinden, welche lediglich unter Benutzung einer Telefon- oder Satellitenstrecke erreichbar sind. Es braucht selbst nicht inventarisiert zu werden, wenn es nur einfach vorhanden ist. Für den Fall, daß mehrere Datensysteme alternativ oder parallel als Überwachungstation nutzbar sind, werden diese ebenfalls mit den bei den anderen Datenverarbeitungssystemen vorhandenen Zusatzeinrichtungen versehen.

Weiterhin istein mit "E" bezeichnetes Energienetz 100 wiedergegeben, welches zur Stromversorgung der angeschlossenen Geräte dient. Gleichzeitig übernimmt es auch noch - in kodierter Form durch Modulation eines HF-Trägers oder eines anderen geeigneten Verfahrens - die örtliche Bereitstellung von den jeweiligen Aufstellungsort differenzierenden Lokationskennungen, die dann zur Erzeugung der Lokationsund Inventarisierungsdaten dienen.

Dem Energienetz 100 wird dabei über Vorschalteinheiten 181 bis 185 nach lokalen Abzweigen jeweils eine Lokationskennung aufmoduliert. Hierbei ist die jeweilige Vorschalteinheit 183 bis 185 für die Energie des Energienetzes passierbar, während dieser eine lokale Zusatzinformation in Richtung zum jeweiligen Abzweig 191 bis 196 aufgeprägt wird, die nur jeweils nur dort verfügbar und somit lesbar ist. Damit werden die Aufstellungsorte der Geräte und Datensysteme durch den Ort der Verbindung mit dem Energienetz lokalisierbar. Jeder mit einem Netzstecker versehene Gegenstand erhält also eine weitergebbare Ortsinformation durch einfaches Verbinden mit dem Energienetz, wie es jedermann geläufig ist. Durch Hinzufügung der Stations- oder Gerätekennung entsteht dann in einem Zusatzgerät, welches dem Gegenstand an- oder zugefügt ist, jeweils die Lokations- und Inventarisierungsinformation.

Im Falle der Datenverarbeitungsstationen 6, 7 und 9 werden die Lokationsdaten (je nach Aufstellungsort mit LD₁ bis LD₄ bezeichnet) - deren Erzeugung und Verteilung weiter unten beschrieben ist - über Energienetzanschlußeinheiten 103 bis 105 aus dem Energienetz 100 abgeleitet und den Stationen 7 bis 9 zwecks Erzeugung der Lokations- und Inventarisierungsdaten zugeleitet. Diese Stationen bilden im Sinne der Erfindung zu inventarisierende "Gegenstände", welche ihre Lokationskennung vom Energienetz ableiten und unter Hinzufügung der geräteeigenen Gegenstandskennung (hier mit SD1 bis SD3 bezeichnet) zur Lokations- und Inventarisierungskennung ergänzen und diese dann über das Datennetz zu der Überwachungsstation 8 senden. Das Ableiten der Lokationskennung vom Netz kann dabei - wie erläutert-über den meist ohnehin vorhandenen Netzanschluß erfolgen. Gegenstände, welche keine Energie aus dem Stromnetz aufnehmen, können mit einem einen Netzstecker aufweisenden Adapter versehen werden, der im übrigen nicht zur Energieübertragung zu dem Gegenstand benutzt wird. Eine Energieübertragung findet dann höchstens zur Stromversorgung des Lokations- und Inventarisierungsmoduls stattdieser ist meist aber verschwindend gering. Es stellt jedoch einen Vorteil dar, wenn dort keine zusätzliche Batterie vorhanden sein muß, welche in regelmäßigen Abständen ersetzt werden muß und daher der Wartung bedarf.

Die Datenverarbeitungstation 6 überwacht beim dargestellten Ausführungsbeispiel die Inventarisierung von drei energieabnehmenden Systemen 151 bis 153, welche ihre Lokations- und Inventarisierungsdaten und Lokationsdaten zur Weiterleitung auf dem Datennetz 10 an die Überwachungsstation 8 übermitteln.

Es ist aber auch die Überwachung der Inventarisierung von Gegenständen bzw. Geräten möglich, welche keine Datenverarbeitungstationen bilden. Hierbei können letztere "Relaisstationen" für die Übermittlung von Lokations- und Inventarisierungskennungen bilden, welche von Gegenständen mit Energienetzanschluß erzeugt werden.

Es sind aber auch Gegenstände vorgesehen, welche ihre Lokations- und Inventarisierungsdaten ohne die Benutzung eines Datenverarbeitungssystems an die Überwachungstation zurückübermitteln. Dies ist günstig, wenn sich Gegenstände nicht in der Nähe einer Datenverarbeitungsstation befinden. Bei dem dargestellten Ausführungsbeispiel eines Lokations- und Inventarisierungssystems ist dies der Gegenstand 161 im Bereich der Lokalität 3. Er erhält seine Lokalisierungskennung vom Energienetz 100 und gibt die um die Gegenstandskennung erweiterte Lokations- und Inventarisierungskennung als Daten zu einem Femsprechendgerät weiter, welches an ein Fernsprech- vorzugsweise ISDN-, Netz angeschlossen ist. Bei einem ISDN-Netz können diese Daten im D-Kanal oder als zusätzliche Daten im B-Kanal übertragen werden, wenn eine Verbindung zum Anschluß des Überwachungssystems 8 hergestellt wird. Dieses kann über das Fernsprechnetzanschlußteil 103 mit dem mit "F" bezeichneten Fernsprechnetz kommunizieren, um von dort die Identifizierungsdaten ID übertragen zu bekommen.

Ein weiteres bei der Lokalität 3 vorgesehenes Gerät 171 übermittelt seine Lokations- und Inventarisierungsdaten LD4 + GD5 an die Datenverarbeitungsstation 6 der benachbarten Lokalität 5. Es ist ersichtlich, daß, wenn die Lokalisierungskennungen stets mit den Gegenstandskennungen übermittelt werden, die Lokalisierungszellen mit identischer Lokalisierungskennungn räumlich nicht zusammenfallen müssen mit den Funkempfangsbereichen, da die Lokationskennung stets getrennt entschlüsselt und zusammen mit der Gegenstandskennung für jeden Gegenstand einzeln als Lokations- und Inventarisierungskennung übertragen wird.

Die an das Datenverarbeitungssystem 6 übermittelten Lokations- und Inventarisierungsdaten und die Lokations- und Inventarisierungsdaten von den anderen Datenverarbeitungssystemen gelangen über das Datennetz 10 und die Datennetzanschlußeinheit 13 zu dem Datenverarbeitungssystem 8.

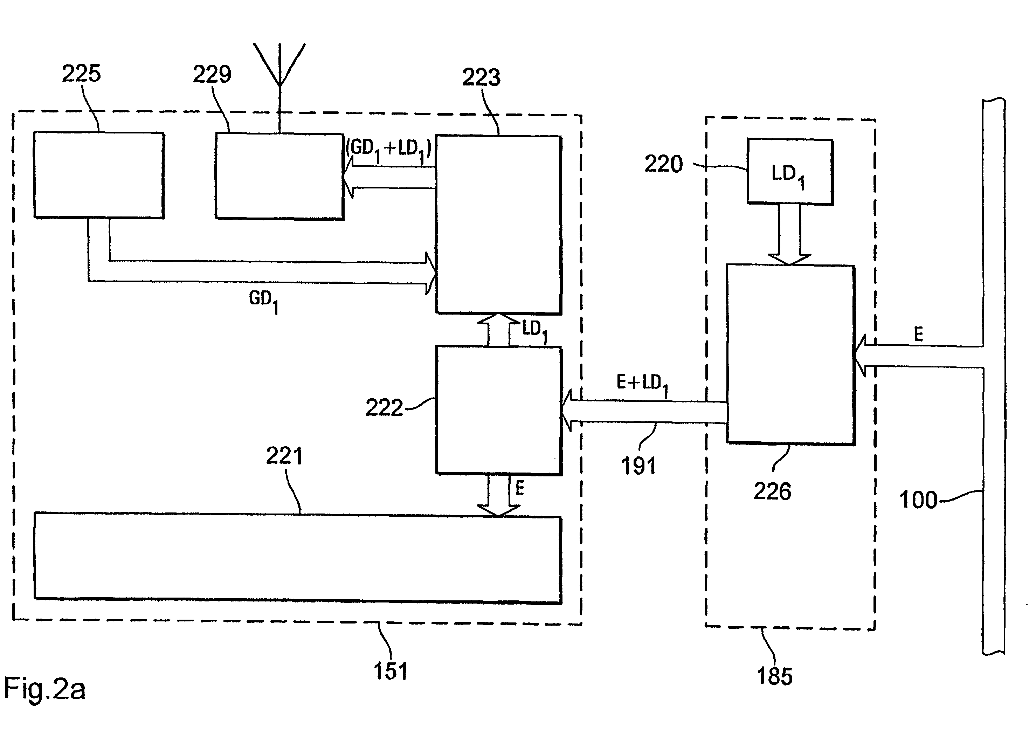

In dem in Figur 2a dargestellten Blockschaltbild eines mit den die Erfindung betreffenden Teilen versehenen Gegenstands mit Lokations- und Inventarisierungsfähigkeit ist ein energieaufnehmendes Gerät 151 als zu inventarisierender Gegenstand schematisch wiedergegeben. Dieses Gerät 151 weist einen zu einem einzigen Block zusammengefaßten Funktionsteil 221 auf, welcher die in einem Gerätegehäuse vorgesehenen Elemente und Baugruppen repräsentiert, die hier jedoch nicht weiter interessieren, da sie lediglich mit der sonstigen Zweckbestimmung des Gegenstands oder Geräts zusammenhängen.

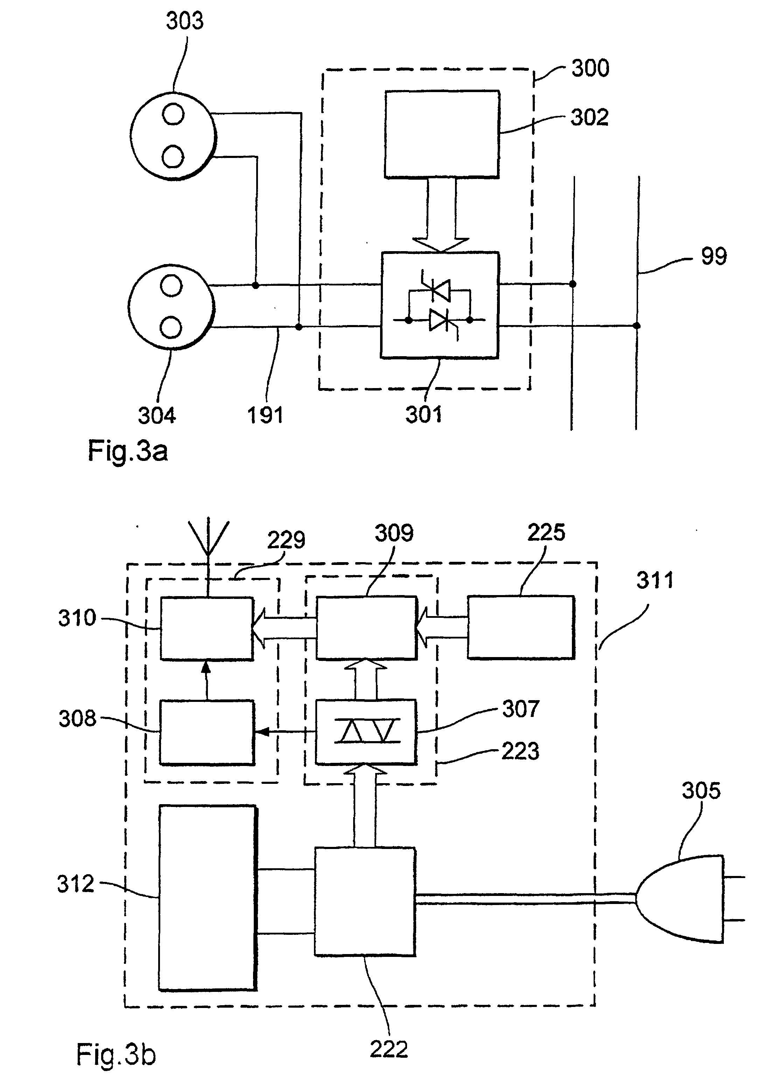

Mit diesem Funktionsteil 221 in Verbindung steht eine Weiche 222, welche die über den Energienetzanschluß vom lokalen Energiezweig 191 hereinkommende Lokationskennung LD₁ von der Energie E trennt. Die Anschlußeinheit selbst ist im einzelnen weiter unten in Figur 3a näher dargestellt. Die Weiche 222 trennt einerseits den reinen Energieanteil des zugeführten über 191 zugeführten Gemisches aus Wechselspannungsenergie und überlagerter Lokationskennung ab und führt diese dann einer Mischstufe 223 zu. Diese führt dann die Lokationskennung LD₁ mit der von einem mit dem Gerät verbundenen Gegenstandskennungsgeber 225 erzeugten Gegenstandskennung GD₁ zusammen. Die Gegenstandskennung ist ein Unikat im System und dient der Identifizierung unabhängig von der Lokalität. Die Gegenstandskennung wird gemeinsam mit der über das Netz aufgenommenen Lokationskennung zu der Lokations- und Inventarisierungskennung (GD₁ + LD₁) zusammengefügt und als zur Übertragung aufbereitete Lokations- und Inventarisierungsdaten über einen HF-Senderteil 229 abgestrahlt. Eine in der Nähe befindliche Datenverarbeitungsstation mit einem entsprechenden Empfangsteil nimmt diese dann - wie beschrieben - Information auf und leitet sie an die Zentrale weiter. Die beschriebenen Baugruppen lassen sich der Funktionseinheit 151 als Zusatzeinrichtung leicht zufügen. Dieses kann beispielsweise in Form eines Moduls geschehen, welcher in den Netzstecker einfügbar ist. Viele Geräte verfügen auch über eine interne Netzanschlußplatine, welche zum Anschluß des Netzkabels dient. Hier ist als Schnittstelle meist eine Lüsterklemme vorgesehen. An dieser Stelle kann der Modul statt dieser Klemme oder an diese anschließend günstig eingefügt werden.

In Figur 2a ist ferner eine Vorschalteinheit 185 schematisch dargestellt, wie sie zwischen dem allgemeinen Energienetz 100 und dem lokalen Netzzweig 191 eingeschaltet ist und dem Träger der Netzenergie (Netzwechselspannung) in dem Netzzweig die Lokationsinformation zufügt. (Die entsprechende Vorrichtung ist in Figur 3b detaillierter dargestellt.) In Figur 2a ist hierbei ein örtlicher Lokationsgeber 220 für die Lokationsinformation schematisch dargestellt. Diese Information wird der Netzenergie mittels eines entsprechenden Modulators 226 zugefügt.

Als Vorteil ergibt sich hierbei insbesondere, daß die Vorschalteinheiten 181 bis 185 in Figur 1 - bis auf den individuell einzustellenden Geber - für Lokationskennung unter sich einheitlich ausgestaltet sein können. Von besonderer Bedeutung ist bei der dargestellten Ausführungsvariante, daß die Lokationsdaten von der Vorschalteinheit 185 lediglich in Richtung auf das daran angeschlossene energieaufnehmendes System abgegeben wird. Damit wird die Lokationsdaten als solche "vom allgemeinen Energienetz abgeschirmt". Dies kann durch geeignete Filterung, Zeitselektion, Schalter oder sonstige Maßnahmen erfolgen, welche eine Ausbreitung der Lokationsdaten zum Netz hin verhindern. Entsprechend kann zusätzlich auch durch weitere oder dieselben Filtermaßnahmen verhindert werden, daßfehlerhafterweise in das Netz eingestreute an entfernter Stelle erzeugte Lokationsdaten über die Vorschalteinheit 181 hinaus zu dem energieaufnehmenden System 151 gelangt. In Figur 2a ist die im Energienetzwerk zu übertragenden Energie mit "E" bezeichnet. Die dargestellte Vorschalteinheit kann üblichen Energieverteilungssystemen-beispielsweise in Büro- und Arbeitsräumen - leicht hinzugefügt bzw. standardmäßig in Stromverteiler zum Anschluß von Geräten oder anderen mit einem Energienetzanschluß versehenen Gegenständen leicht eingefügt werden.

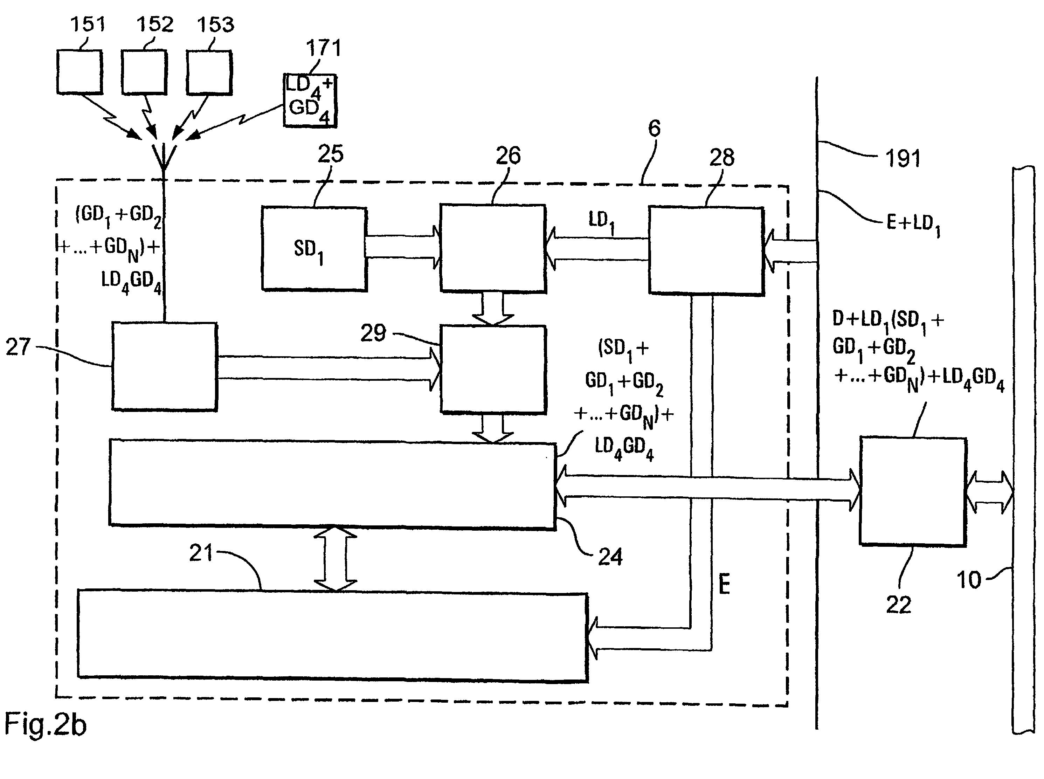

Bei dem in Figur 2b dargestellten Blockschaltbild eines zur Aufnahme und Weiterleitung der von der Einheit gemäß Figur 2a abgegebenen Lokations- und Inventarisierungsdaten an die Überwachungsstation geeigneten Datenverarbeitungssystems 6 ist ein übliches Prozessorsystem 21 zu einem einzigen Block zusammengefaßt wiedergegeben. Mit diesem Prozessorsystem 21 in Verbindung steht eine Datennetzanschlußeinheit 22, welche die Verbindung zu dem Datennetz 10 herstellt. Die Datennetzanschlußeinheit 22 wird dabei von dem Prozessorsystem 21 in der Weise gesteuert, daß eine Übertragung der Daten über das Netz entsprechend den im Netzwerk vorgesehenen Protokollen erfolgt.

Des weiteren ist das Datenverarbeitungssystem 6 an den lolokalisierten Zweig 191 des Energienetzes angeschlossen. Von hier wird die der Netzenergie E überlagerte Lokalisierungskennung LD₁ aufgenommen. Das Datenverarbeitungssystem 6 weist eine Weiche 28 auf, welche die Abtrennung der Lokationsdaten von der Netzwechselspannung vornimmt. Die Lokationskennung LD₁ gelangt zu einer Mischstufe 26, in der die Lokationskennung LD₁ mit der in der Datenverarbeitungssystem 6 aus einem Lokationsgeber 25 abgefragte Gegenstandskennung SD₁ zusammengefügt wird. Über eine HF-Empfangseinheit 26 werden die mit einer HF-Frequenz modulierten Lokations- und Inventarisierungskennungen der in der Nähe befindlichen Gegenstände 151 bis 153 aufgenommen und in einer weiteren Mischstufe 29 mit Systemkennung SD (entsprechend der Lokations- und Inventarisierungskennung von externen zu inventarisierenden Gegenständen) zusammenzugefügt. Auf diese Weise kann das dargestellte Datenverarbeitungssystem seine Lokations- und Inventarisierungsdaten unter Hinzufügung der Systemkennung SD unabhängig erzeugen, so daßdie Lokalisierungskennung des Standorts des Datenverarbeitungssystems nicht mit derjenigen der Gegenstände zusammenfallen muß, deren Lokations- und Inventarisierungsdaten über die Antenne des HF-Empfangsteils 27 aufgenommen werden. Damit kann die Anzahl der unterschiedlichen Lokalisierungskennungen größer gewählt werden als die Anzahl der aufnehmenden Datenverarbetungsstationen. Dies wirkt sich ebenfalls günstig auf den beim Aufbau des erfindungsgemäßen Lokations- und Inventarisierungssystems zu treibenden Aufwand aus. Voraussetzung ist, daß die Funkreichweite größer ist als der Bereich eines mit derselben Lokationskennung versehenen Zweigs des Energienetzes. Bei einer anderen - nicht dargestellten - Variante ist es auch möglich, auf die Übertragung der Lokationsdaten bei jedem einzelnen Gegenstand zu verzichten. Dann müssen sich diese Gegenstände aber in derselben Lokationszelle befinden wie die Empfangsoder Übertragungseinheit, welche dann die Lokationskennung vor der Absendung der Lokations- und Inventarisierungsdaten an die Überwachungsstation hinzufügt.

In der Figur 2b sind die übrigen im Datennetzwerk zu übertragenden Daten ebenfalls mit "D" bezeichnet und werden in üblicher Weise zwischen Datenverarbeitungssystem 6 und Netz 10 über die Datennetzanschlußeinheit 22 transportiert. Die Lokations- und Inventarisierungsdaten der umliegenden Geräte und Einrichtungen mit Netzanschluß werden mit den Daten an die entfernte Überwachungsstation 8 übertragen und dort verwaltet.

Bei dem in Figur 3a dargestellten Ausführungsbeispiel eines Vorschaltgeräts 300 zur Überlagerung des Energienetzes mit einer Lokationsiniformation wird bei einer Netzwechselspannung zur Kennzeichnung des Orts nach einem binären Kode eine Anzahl von Netzhalbwellen unterdrückt oder verformt, wobei der somit übermittelte Kode die Lokationskennung bildet. Diese Ausführung stellt dabei ein Beispiel einer mit einfachen Mitteln herzustellenden Ausführungsform dar. Hierbei liegt die zu übertragende Lokations- und Inventarisierungsinformation binär kodiert in den einzelnen Wellen oder Halbwellen. In entsprechender Weise kann dem Netzwechselstrom auch ein hochfrequentes Signal überlagert werden oder in sonstiger Weise eine geringfügige Änderung der Halbwellenformen herbeigeführt werden, welche unabhängig von den einzelnen Halbwellen der Stromenergie aufmoduliert ist. Damit enthält das Stromnetz eine detektierbare Information , die ohne Einfluß auf die Energie abnehmenden Verbraucher bleibt.

Die Netzwechselspannung wird dem Vorschaltgerät 300 auf einer Sammelleitung 99 zugeführt. Dort gelangt sie zu einer steuerbaren Thyristoreinheit 301 als steuerbarer elektronischer Schalter oder Thyristor, welcher den Durchlaß der Netzhalbwellen steuert. Der die Lokationsinformation bestimmende Binärkode der zu unterdrückenden Halbwellen wird durch ein Steuerteil 302 erzeugt, welches individuell auf die jeweilige Lokalität einzustellen ist.

Der Thyristoreinheit 301 nachgeschaltet sind zwei Steckdosen 303 und 304, an die zu inventarisierende Gegenstände als Verbraucher angeschlossen werden, welche auch Ziel der Übertragung der Lokationskennung sind.

In Figur 3b ist ein Vorschalt- oder Zusatzgerät 311 dargestellt, welches einem energieaufnehmenden Gerät 312 in der Netzleitung nach einem Netzstecker 305 voran- oder ins sonstiger Weise zugeschaltet wird. Dabei wird die über das Energienetz hereingekommene Lokationsinformation in einer Baugruppe 222 dekodiert, mit der von einer Gebereinheit für die Individualkennung 225 zusammengeführt und einer Senderbaugruppe 229 übermittelt, welcher diese zusammen mit einer Gerätekennung einer Datenverarbeitungseinheit übermittelt. Die aus Lokationsund Gerätekennung zusammengesetzte Lokations- und Inventarisierungskennung wird von dieserdann an die zentrale Überwachungsstation 8 zur Erfassung und Aktualisierung weiterleitet. Im einzelnen wird in der Baugruppe 222 aus der Folge von fehlenden oder veränderten Halbwellen in der Baugruppe 307 ein Binärcode hergeleitet, der die Lokationskennung bildet. Diese Information wird in der Mischstufe 309 der Gegenstandskennung zugefügt. Damit sich die Signale benachbarter Sender nicht überlagern, ist in der Senderbaugruppe ein Frequenzteiler 308 vorgesehen, welcher die Netzfrequenz um das Verhältnis einer (relativ großen) Primzahl untersetzt, welche sich von den Untersetzungsverhältnissen anderer gelieferter Sender unterscheidet. Mit dem Ausgangssignal des Frequenzteilers 308 wird der Sender 310 impulsweise angesteuert, so daß er nur für verhältnismäßig kurze Zeitdauern in relativ großen Zeitabständen aktiv ist. Die abgegebenen Signalfolgen sind aber ausreichend, um die Lokations- und Inventarisierungsinformationen bei der Überwachungseinheit genügend zu aktualisieren, da Ortswechsel verhältnismäßig selten sind.

Die Erfindung beschränkt sich in ihrer Ausführung nicht auf die vorstehend angegebenen bevorzugten Ausführungsbeispiele. Vielmehr ist eine Anzahl von Varianten möglich, welche von der dargestellten Lösung auch bei grundsätzlich anders gearteten Ausführungen Gebrauch macht.

## Patentansprüche

1. Lokations- und Inventarisierungssystem für Gegenstände, welche als Energieabnehmer mit einen Anschluß für ein Energieversorgungsnetzwerk versehen sind und jeweils eine individuelle Gegenstandskennung als Teil einer Lokationsund Inventarisierungsinformation aufweisen, die von einer zentralen Stelle aus abfragbar ist, **dadurch gekennzeichnet, daß** im Bereich einer Energienetzanschlußeinheit für das die Energie aufnehmende System ein Geber für eine dem Energieträger als zusätzliche Information aufgeprägte Lokationskennung, die sich von anderen Lokationskennungen in dem Energienetz unterscheidet, vorgesehen ist und mit dieser in fester Wirkverbindung steht,
daß die Lokationskennung von der Energienetzanschlußeinheit über das Energienetz ausschließlich in Richtung auf das mindestens eine mit dieser Energienetzanschlußeinheit verbundene Energie aufnehmende System aussendbar ist,
daß in dem Energie aufnehmenden System ein Aufnehmer für diese Lokationskennung vorgesehen ist, sowie ein Umsetzer, welcher die Lokationskennung zusammen mit oder in Zuordnung zu der Gegenstandskennung in ein zur Übertragung geeignetes Datenformat umsetzt und an ein datenverarbeitendes System zur Auswertung übermittelt.

2. Lokations- und Inventarisierungssystem nach einem der vorhergehenden Ansprüche, **dadurch gekennzeichnet, daß** die Lokationskennung durch mindestens einen elektrischen Parameter mindestens eines im Geber für die Lokationskennung vorgesehenen bzw. den Geber bildenden elektrischen oder elektronischen Bauelements bestimmt wird.

3. Lokations- und Inventarisierungssystem nach einem der vorhergehenden Ansprüche, **dadurch gekennzeichnet, daß** der Geber für die Lokationskennung in eine Steck- oder Verteilerdose des Energienetzes einbezogen ist.

4. Lokations- und Inventarisierungssystem nach einem der vorhergehenden Ansprüche, **dadurch gekennzeichnet, daß** die Übermittlung der Geräte- und oder Lokationskennung an ein Datenverarbeitungssystem über eine Funkstrecke erfolgt.

5. Lokations- und Inventarisierungssystem nach einem der vorhergehenden Ansprüche, **dadurch gekennzeichnet, daß** die Übermittlung der Geräte- und oder Lokationskennung an eine entfernte Überwachungstation über ein Datenoder Kommunikationsnetz erfolgt.

6. Lokations- und Inventarisierungssystem nach Anspruch 5, **dadurch gekennzeichnet, daß** es sich bei dem Kommunikationsnetz um ein ISDN-Netz handelt.

7. Lokations- und Inventarisierungssystem nach einem der vorhergehenden Ansprüche, **dadurch gekennzeichnet, daß** die Lokationskennung dem Energieträger zusätzlich aufmoduliert oder in sonstiger Weise aufgeprägt ist.

8. Lokations- und Inventarisierungssystem nach einem der vorhergehenden Ansprüche, **dadurch gekennzeichnet, daß** ein Selektionsvorrichtung zur Abtrennung der Lokationskennung von dem Energieträger innerhalb des Netzsteckers zum Anschluß eines zu inventarisierenden Gegenstands vorgesehen ist.

## Claims

1. A location and inventory system for articles which as energy consumers are provided with a connection for an energy supply network and each have a respective individual article identification as part of an item of location and inventory information which can be interrogated from a central station, **characterized in that** a transmitting assembly for a location identification which is impressed on the energy carrier as additional information and which differs from other location identifications in the energy network is provided in the region of an energy network connection unit for the energy-receiving system, and is fixedly operatively connected to same,
the location identification can be emitted by the energy network connection unit by way of the energy network exclusively towards the at least one energy-receiving system connected to said energy network connection unit, and
provided in the energy-receiving system is a receiving means for said location identification, and a converter which converts the location identification together with or in association with the article identification into a data format suitable for transmission and communicates same to a data-processing system for evaluation purposes.

2. A location and inventory system as set forth in claim 1 **characterized in that** the location identification is determined by at least one electrical parameter of at least one electrical or electronic component which is provided in the transmitting assembly for the location identification or which forms the transmitting assembly.

3. A location and inventory system as set forth in one of the preceding claims **characterized in that** the transmitting assembly for the location identification is incorporated into a plug or distributor socket of the energy network.

4. A location and inventory system as set forth in one of the preceding claims **characterized in that** communication of the apparatus and/or location identification to a data processing system is effected by way of a radio path.

5. A location and inventory system as set forth in one of the preceding claims **characterized in that** communication of the apparatus and/or location identification to a remote monitoring station is effected by way of a data or communication network.

6. A location and inventory system as set forth in claim 5 **characterized in that** the communication network is an ISDN system.

7. A location and inventory system as set forth in one of the preceding claims **characterized in that** the location identification is additionally modulated on the energy carrier or impressed thereon in some other fashion.

8. A location and inventory system as set forth in one of the preceding claims **characterized in that** there is provided a selection device for separation of the location identification from the energy carrier within the network plug for connection of an article to be inventoried.

## Revendications

1. Système de localisation et d'inventoriage pour des objets qui, en tant que consommateurs d'énergie, sont munis d'un raccordement pour un réseau d'alimentation en énergie et qui présentent chacun un critère d'objet individuel en tant que partie d'une information de localisation et d'inventoriage qu'on peut interroger à partir d'un point central, **caractérisé en ce que** dans la zone d'une unité de raccordement au réseau d'énergie pour le système qui capte l'énergie on prévoit un transmetteur pour un critère de localisation - marqué de la source d'énergie en tant qu'information supplémentaire - qui se différencie d'autres critères de localisation dans le réseau d'énergie et est en liaison effective fixe avec ceux-ci, **en ce que** le critère de localisation peut être envoyé par l'unité de raccordement au réseau d'énergie, au moyen du réseau d'énergie, exclusivement en direction du système qui capte une énergie, au moins au nombre d'une, liée à cette unité de raccordement au réseau d'énergie,
**en ce que** dans le système qui capte l'énergie on prévoit un capteur pour ce critère de localisation ainsi qu'un convertisseur qui convertit le critère de localisation conjointement avec ou en association avec le critère d'objet en un format de données adapté à la transmission et le transmet pour interprétation à un système de traitement de données.

2. Système de localisation et d'inventoriage selon la revendication précédente, **caractérisé en ce que** le critère de localisation est établi par au moins un paramètre électrique d'au moins un composant électrique ou électronique prévu dans le transmetteur pour le critère de localisation et/ou formant le transmetteur.

3. Système de localisation et d'inventoriage selon l'une des revendications précédentes, **caractérisé en ce que** le transmetteur pour le critère de localisation est introduit dans une prise de courant ou dans une boîte de distribution du réseau d'énergie.

4. Système de localisation et d'inventoriage selon l'une des revendications précédentes, **caractérisé en ce que** le transfert du critère d'appareil et/ou de localisation est réalisé sur un système de traitement de données par l'intermédiaire d'un trajet radio.

5. Système de localisation et d'inventoriage selon l'une des revendications précédentes, **caractérisé en ce que** le transfert du critère d'appareil et/ou de localisation à un poste de surveillance à distance est réalisé par l'intermédiaire d'un réseau de données ou de communication.

6. Système de localisation et d'inventoriage selon la revendication 5, **caractérisé en ce que**, pour ce qui est du réseau de communication, il s'agit d'un réseau RNIS.

7. Système de localisation et d'inventoriage selon l'une des revendications précédentes, **caractérisé en ce que** le critère de localisation est en outre modulé sur la source d'énergie ou marqué d'une autre façon.

8. Système de localisation et d'inventoriage selon l'une des revendications précédentes, **caractérisé en ce qu'**un dispositif de sélection destiné à séparer de la source d'énergie le critère de localisation est prévu à l'intérieur de la prise au réseau pour raccorder un objet à inventorier.
